# DEMANDE DE BREVET EUROPEEN

(11) **EP 1 010 670 A1**
(43) Date de publication de la demande: **21.06.2000**
(21) Numéro de dépôt: 99420244.8
(22) Date de dépôt: 15.12.1999
(51) Int. Cl.: C02F 3/12, C02F 3/20, B01D 21/00

(54) **Station d'épuration d'effluents pollués, liquides ou gazeux, dont au moins l'un des postes de traitement est constitué par une citerne souple**

(30) Priorité: 18.12.1998 FR 9816280
(71) Demandeur: Labaronne-Citaf, 38200 Vienne (FR); Charton, Michel, 69480 Pommiers (FR)
(72) Inventeur: Haricot, Gérard, 38200 Vienne (FR); Charton, Michel, 69480 Pommiers (FR)
(74) Mandataire: Vuillermoz, Bruno

(57) **Abrégé**

Station d'épuration d'effluents pollués fluides, liquides ou gazeux - eau ou air par exemple - qui comprend une zone de traitement (1) en vue de séparer le fluide pollué des matières polluantes, une zone de décantation (2) et de préférence une zone de stockage (3) des boues concentrées après décantation, caractérisée en ce que la zone de traitement (1) est constituée par une citerne souple, fermée, étanche, et autoportante, comprenant :
- un circuit d'admission (10,18) du fluide pollué à traiter et au moins un circuit (11) ou (18) pour l'introduction de l'élément de traitement, l'un de ces circuits (18), permettant d'injecter un gaz (air) à l'intérieur de la citerne ;
- un circuit de transfert (14) du liquide ou des boues chargées des constituants polluants dans la zone de décantation (2) ;
- un évent (7) pour l'évacuation de gaz.

## Description

### Domaine Technique

La présente invention a trait au secteur du traitement épuratoire des rejets pollués, d'origine urbaine, industrielle ou agricole.

Elle a trait plus particulièrement à un nouveau type d'installation qui non seulement peut être utilisé pour réaliser un traitement d'épuration biologique de rejets liquides mais également un traitement de « lavage » en vue de la dépollution de rejets gazeux ou tout simplement d'air pollué.

### Techniques antérieures

Pour les rejets pollués liquides, on utilise des procédés épuratoires biologiques, qu'ils soient du type à boues activées ou biofiltres, comportant un prétraitement physico-chimique, une aération, une décantation et, éventuellement, un moyen de stockage de la biomasse produite avant élimination.

On peut classer les ouvrages conventionnels à filière biologique en trois catégories, à savoir :
- les ouvrages à biomasse fixée (type lit bactérien, biofiltres..),
- les ouvrages à biomasse libre (type lagune, fosse Imhof..) et,
- les ouvrages à biomasse activée.

Les ouvrages à biomasse fixée ont des rendements d'épuration moyens et plus particulièrement sur l'azote. Ils sont de plus générateurs de nuisances olfactives importantes, sauf dans le cas des biofiltres, mais qui sont alors associés à un autre système de traitement.

Les systèmes à biomasse libre sont des ouvrages rustiques qui les font réserver à de petites charges polluantes généralement limitées à 2000 équivalent/habitant. Ils sont assez sensibles aux changements de température et l'abaissement des rendements d'azote l'hiver est caractéristique de ce type de traitement. De plus, ils sont aussi souvent générateurs de mauvaises odeurs.

Les ouvrages à biomasse activée sont sans conteste les plus performants du point de vue épuratoire. Ils font appel à des cuves ou des bassins en général ouverts à l'air libre, ce qui outre les questions de génie civil, pose le problème de nuisances olfactives en cas de dysfonctionnements difficilement maîtrisables. De plus, ces systèmes entraînent une grande consommation d'énergie, ce qui explique le fait qu'ils sont en général réservés à des collectivités ou des industries importantes. Enfin, ils posent de gros problèmes d'extension lorsqu'ils atteignent leur pleine capacité et sont très sensibles aux variations de charge, ce qui présente quelques problèmes sérieux pour des collectivités à vocation touristique ou les industries dépendantes de l'activité de leur technique de production.

Ces ouvrages, d'une manière générale, nécessitent quelle que soit leur nature, des travaux importants préalablement à leur mise en fonctionnement, ce qui ne leur permet pas de faire face à des situations de pollution accidentelle ou à des surcharges limitées dans le temps.

Il a également été proposé, comme cela ressort de l'US-A-4 944 872, de réaliser des stations de traitement ou de stockage flottantes ou immergées par exemple dans la mer.

De telles installations ne sont cependant pas conçues pour être installées hors sol ni pour réaliser le traitement de gaz pollués.

Concernant les installations de traitement de gaz pollués, air notamment, l'une des techniques utilisées consiste à réaliser une opération de « lavage », qui consiste à introduire l'air pollué à l'intérieur d'une cuve, ouverte ou fermée, l'eau de lavage se chargeant de polluants, l'air purifié étant ensuite évacué vers l'extérieur. L'eau chargée est ensuite transférée vers une station d'épuration biologique.

### Exposé de l'invention

Or, on a trouvé, et c'est ce qui fait l'objet de la présente invention, qu'il était possible de réaliser un nouveau type d'installation d'épuration qui non seulement permet de traiter des rejets pollués d'origine urbaine, industrielle ou agricole liquides, en faisant appel à la technique biologique dite « à biomasse activée », et ce, en éliminant les inconvénients que présente une telle technologie telle qu'elle est mise en oeuvre actuellement, et qui, par ailleurs, peut également être adapté pour traiter des gaz pollués, air par exemple, et ce en substituant, à tout ou partie des cuves ouvertes d'une station d'épuration conventionnelle, des citernes souples, étanches, réalisées à partir de tissus enduits et qui, jusqu'à ce jour, n'étaient utilisées que pour réaliser le stockage de produits divers tels que eau, voire même rejets polluants avant leur élimination.

D'une manière générale, l'invention concerne donc un nouveau type de station d'épuration d'effluents fluides pollués, liquides ou gazeux - eau ou air par exemple - qui comprend une zone de traitement en vue de séparer le fluide pollué des matières polluantes, une zone de décantation et une zone de stockage des boues résiduelles après décantation.

Elle se caractérise en ce que la zone de traitement est constituée par une citerne souple, fermée, étanche et autoportante comprenant :
- un circuit d'admission du fluide pollué à traiter et au moins un circuit pour l'introduction de l'élément de traitement biomasse ou eau de lavage, l'un de ces circuits permettant d'injecter un gaz (air) à l'intérieur de la citerne ;
- un circuit de transfert du liquide ou de boues chargées des constituants polluants dans la zone de décantation ;
- un évent pour l'évacuation de gaz.

De préférence, une telle zone de traitement comporte des moyens permettant le prélèvement d'effluents à l'intérieur de l'enceinte en cours de traitement en vue d'une analyse.

Dans la suite de la description, par mesure de simplification, le liquide ou gaz pollué sera désigné par le terme unique « rejet ».

Une telle enceinte de traitement peut être utilisée aussi bien en tant qu'aérateur pour le traitement des eaux usées selon la technique dite « par boues activées » que comme enceinte de lavage de gaz pollué.

Dans un souci de clarté, l'invention sera tout d'abord décrite dans le cadre d'un traitement de rejets pollués liquides selon la technique dite par « boues activées », la manière dont elle peut être mise en oeuvre pour le traitement de gaz (air pollué) étant exposée ultérieurement.

Dans le cadre de l'invention, la zone de traitement constitue l'aérateur d'une telle station. Cet aérateur est constitué par une citerne souple, dont la capacité est fonction du volume du produit que l'on souhaite traiter, ladite citerne comprenant :
- un circuit d'entrée pour les boues décantées destinées à assurer la maîtrise de la croissance de la biomasse ;
- un circuit d'admission dudit effluent permettant sa répartition à l'intérieur dudit réservoir de façon régulière et homogène ;
- un circuit de prélèvement après traitement en vue du transfert à la zone de décantation et ;
- des moyens permettant de diffuser de l'air à l'intérieur de la citerne ;
- des évents pour l'évacuation de l'air entrant et des gaz générés pendant l'aération de l'effluent traité.

Les moyens permettant de diffuser de l'air à l'intérieur de la citerne peuvent être constitués par un système mélangeur/aérateur de type connu.

Cependant, selon une forme de réalisation préférentielle, ces moyens sont conçus pour permettre de diffuser l'air sur toute la surface de la base de la citerne, lesdits moyens étant constitués par une membrane perforée, soudée contre la paroi inférieure de la citerne.

Avantageusement, le circuit d'admission de l'effluent à l'intérieur du réservoir comporte des déflecteurs ou répartiteurs perforés disposés à l'intérieur même dudit réservoir et s'étendant au moins sur une partie le long des parois de ce dernier, permettant une bonne répartition et agitation favorisant l'aération.

Le circuit de prélèvement de la liqueur mixte est de préférence raccordé à la partie supérieure de l'enceinte.

Enfin, la membrane perforée au travers de laquelle s'effectue l'introduction de l'air, enrichi ou non en oxygène, à l'intérieur de la citerne, est soudée contre le fond de ce dernier, de préférence selon des zones localisées ménageant des chicanes. L'admission de l'air est obtenue par un ou plusieurs orifices aménagés sur le fond de la citerne et l'air est réparti sur toute la surface au travers de chicanes aménagées par soudure de la membrane perforée, le diamètre des orifices pouvant être variable et étant en général plus faible au niveau de la zone d'admission que vers les extrémités.

Un tel aérateur peut être utilisé comme chambre de lavage pour assurer le traitement de gaz pollués.

Dans un tel cas, le circuit pour les boues est éliminé et le gaz pollué est introduit à l'intérieur de la chambre au travers des moyens qui permettent de diffuser l'air sur toute la surface de la base de la citerne, l'eau de lavage étant quant à elle introduite par l'intermédiaire du circuit d'admission qui permettait la répartition à l'intérieur de la citerne de façon régulière et homogène de l'effluent à traiter dans le cas d'un rejet liquide.

Pour optimiser ou réguler la circulation de l'air à l'intérieur de l'enceinte, cette dernière peut éventuellement renfermer des additifs divers, tels que matériaux microcellulaires, ces derniers jouant le rôle de support de biomasse.

Le décanteur, qu'il soit utilisé aussi bien pour des effluents liquides que pour l'eau de lavage de gaz pollué, est, quant à lui, également constitué d'une citerne souple et comporte un circuit d'admission relié au circuit de transfert de l'aérateur qui a une structure telle que la liqueur mixte constituée de boue et liquide aéré, soit introduite à l'intérieur de ladite citerne en générant le minimum de turbulence.

Pour ce faire, il comporte à l'entrée un répartiteur constitué de déflecteurs, souples ou rigides, se présentant sous la forme d'un cylindre perforé sur sa longueur ou simplement ouvert à son extrémité tendant à guider la boue vers le fond de l'enceinte.

Ladite enceinte est équipée, en partie basse, d'un circuit d'évacuation des boues transférant ces dernières à un silo de stockage et qui, également permet de recycler une partie desdites boues au niveau de l'aérateur.

Le prélèvement de l'eau claire est réalisé au voisinage de la partie supérieure de l'enceinte, l'écoulement vers un exutoire étant obtenu simplement par la gravité mais éventuellement pouvant être obtenu par aspiration. Dans le cas de traitement d'un gaz pollué, l'eau claire peut être recyclée à l'intérieur de la chambre de traitement comme eau de traitement.

Pour activer ou réguler la décantation, l'intérieur du décanteur peut être rempli d'additifs divers, de quelque nature que ce soit.

Si le silo à boues peut être une simple citerne souple étanche conventionnelle équipée d'un raccord à une pompe permettant d'évacuer périodiquement lesdites boues en vue de les éliminer, selon une forme de réalisation, un tel silo peut être conçu d'une manière similaire à l'aérateur décrit précédemment constituant ainsi un aérateur additionnel avec traitement biologique naturel en vue de compléter la minéralisation des boues (stabilisation) et d'éliminer la production d'odeur résultant d'un départ de fermentation.

### Description sommaire des dessins

L'invention et les avantages qu'elle apporte sera mieux comprise grâce à l'exemple de réalisation donné ci-après, qui est illustré par les dessins annexés et qui porte plus spécifiquement sur une ligne de traitement d'effluents liquides :
- la figure 1 est une vue schématique d'une station d'épuration complète réalisée conformément à l'invention à partir de réservoirs souples ;
- la figure 2 est une vue en élévation montrant plus particulièrement la structure d'un poste de traitement conforme à l'invention utilisable aussi bien comme aérateur dans le cadre d'une station d'épuration à biomasse activée qu'en tant qu'enceinte de lavage de gaz pollué ;
- la figure 3 est une vue de détail montrant, vue de dessus, la manière dont est assurée la répartition de l'air à la base d'un tel poste de traitement ;
- les figure 4 est une vue d'ensemble en coupe d'un décanteur réalisé conformément à l'invention.

### Manière de réaliser l'invention

L'invention sera décrite plus particulièrement pour une station d'épuration d'effluents pollués liquides selon la technique à biomasse activée.

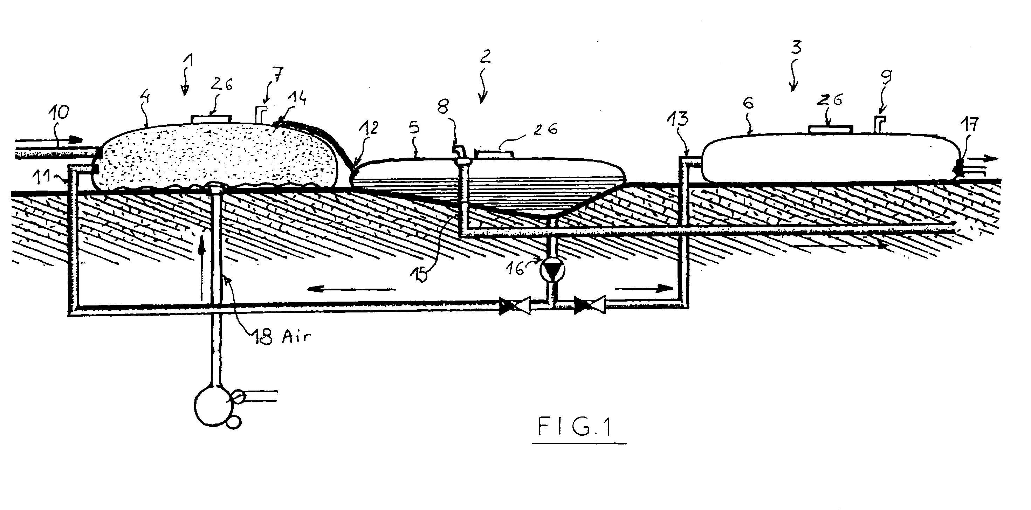

En se reportant aux figures annexées, et plus particulièrement à la figure 1, une telle station d'épuration est réalisée conformément à l'invention comporte donc une zone de traitement dite zone d'aération (1) des rejets à traiter, une zone de décantation (2) et un silo de récupération (3) des boues activées qui se déposent à l'intérieur du décanteur.

Chacun de ces postes (1,2,3) est constitué par une citerne fermée, étanche, souple et autoportante (4,5,6), à base d'un tissu enduit présentant une grande résistance à l'élongation et à la déchirure.

Chaque citerne est équipée à sa partie supérieure d'un évent (7,8,9) pour l'évacuation des gaz produits au cours de chaque phase de traitement, l'évent (7) servant à évacuer un gaz dépollué lorsque le poste (1) est utilisé comme poste de lavage d'un gaz pollué.

Par ailleurs, chacune des citernes comporte au moins un circuit pour l'admission des liquides à traiter et/ou des boues (10-11)(12-13) ainsi qu'au moins un circuit (14,15,16,17) permettant d'assurer le transfert du liquide et/ou des boues pour une seconde phase opératoire et/ou récupération en vue d'un recyclage ou évacuation.

Enfin, chaque citerne est équipée d'un moyen de sécurité conventionnel (27) au débordement contre la surcharge et à la vidange contre le manque de liquide ainsi que des moyens permettant d'effectuer un prélèvement d'effluents à l'intérieur de l'enceinte en cours de traitement, notamment en vue d'une analyse constituée par exemple par un capot étanche (26) prévu à la partie supérieure du réservoir.

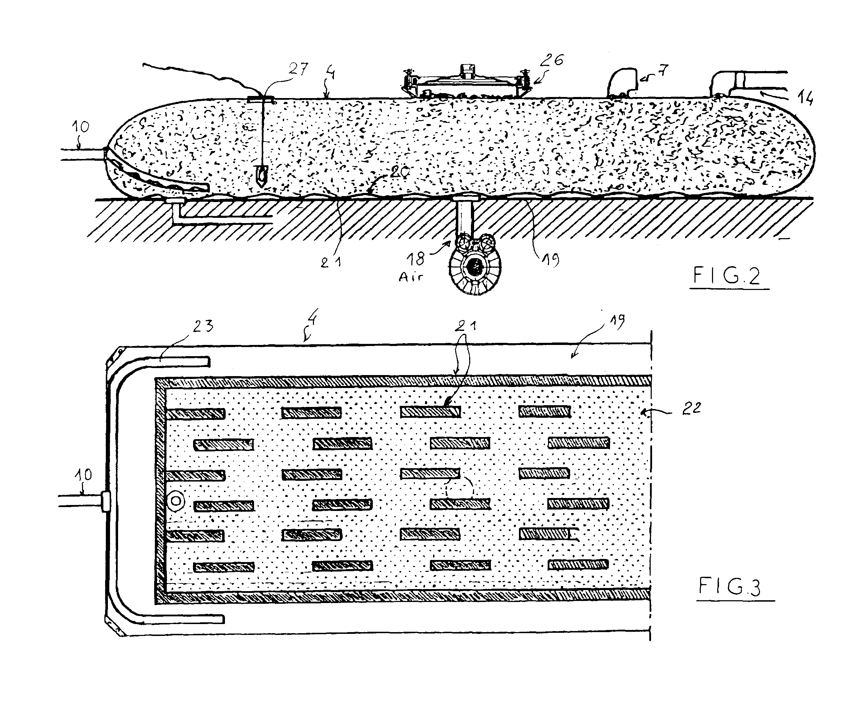

Les figures 2 et 3 montrent plus particulièrement la structure d'une citerne souple, étanche et autoportante adaptée pour réaliser un aérateur (1) entrant dans la réalisation d'une telle station d'épuration mais qui, éventuellement, pourrait être associée à un décanteur conventionnel.

Cet aérateur est donc constitué par une citerne souple en tissu enduit (4) dont le volume est fonction du type de stations à réaliser, et qui peut atteindre 300 m³, voire même plus. Sur l'un des côtés de cette enceinte, sont raccordés d'une part le circuit (11) d'entrée pour les boues activées destinées à assurer le traitement et le circuit (10) d'admission de l'effluent.

Le circuit de prélèvement (14) après traitement est, quant à lui, prévu à la partie supérieure de la citerne et est raccordé au circuit d'admission (12) de la zone de décantation (2).

Des moyens (18) sont prévus à la base de la citerne (4) pour diffuser de l'air sur toute la surface de la base (19) du réservoir, cette diffusion étant obtenue par l'intermédiaire d'une membrane perforée (20) soudée à la base inférieure du réservoir (4). Les soudures (21) sont réalisées de manière localisée, ce qui permet de ménager des chicanes au travers desquelles s'écoule le flux d'air, le diamètre des orifices (22) pouvant être variable et étant en général plus faible au niveau de la zone d'admission (18) que vers les extrémités. Un diamètre de 0,1 mm à 1 mm permet une bonne répartition de l'air sur toute la surface, la pression d'air étant de l'ordre de 0,3 bars.

Pour obtenir une bonne répartition et une agitation du mélange boues activées/effluent, le circuit d'admission (10) a une structure telle qu'illustrée à la figure 3 et comporte, à l'intérieur du réservoir, des déflecteurs ou répartiteurs (23). Ces déflecteurs qui s'étendent au moins sur une partie le long des parois peuvent être souples ou rigides.

Dans l'exemple illustré à la figure 3, les déflecteurs (23) sont perforés pour permettre l'admission de l'effluent à l'intérieur de l'enceinte (4), mais éventuellement il pourrait être constitué par un tube non perforé ouvert à son extrémité.

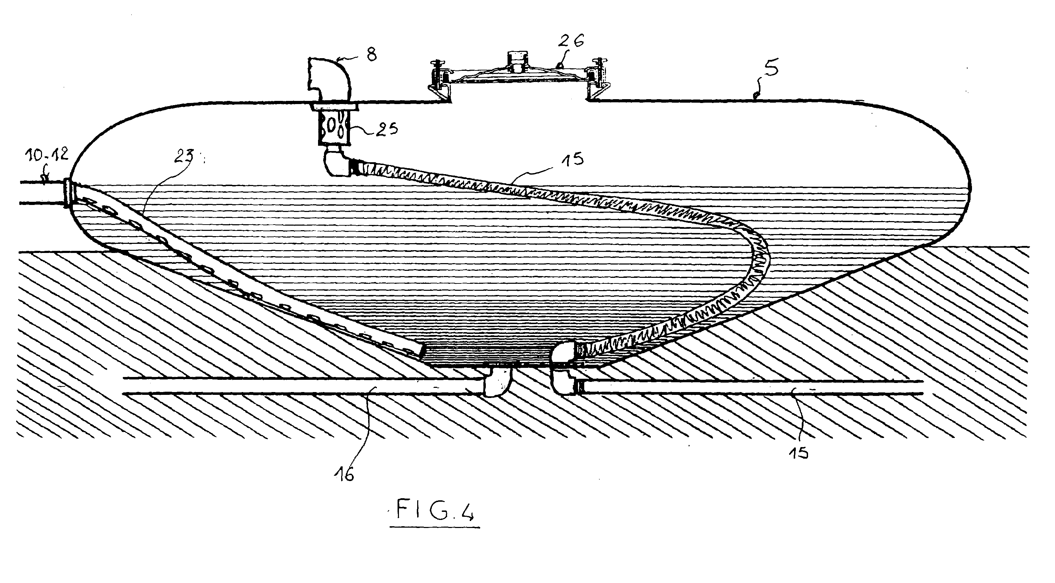

Le décanteur, tel que schématisé à la figure 4, est également constitué par une citerne souple (5) comportant donc le circuit d'admission (12) relié au circuit de transfert (14) de l'aérateur (1). Comme dans le cas de l'aérateur, la liqueur mixte, constituée de boue et de liquide aéré, est introduite à l'intérieur de ladite citerne (5) en générant le minimum de turbulence et ce, au moyen de déflecteurs (23) ayant une structure similaire à celui décrit pour l'aérateur, déflecteurs qui sont orientés de manière à repousser la boue vers le fond de l'enceinte (5).

Ladite enceinte est équipée à sa partie inférieure d'un circuit d'évacuation (16) des boues, permettant de transférer ces dernières soit au silo de stockage (3) en étant relié au circuit d'admission (13) de ce dernier, soit à l'aérateur (1) en vue de recycler une partie des boues condensées.

Le circuit de prélèvement (15) de l'eau claire est réalisé pour que celui-ci se fasse en partie supérieure de l'enceinte (5). Ce prélèvement est réalisé au travers d'un filtre (25) fixé à la partie supérieure de l'enceinte, et à l'extrémité duquel est fixé le conduit d'évacuation (15).

De préférence, ce conduit d'évacuation (15) s'étend sur toute la hauteur de l'enceinte, ce qui permet d'obtenir un prélèvement par simple gravité.

Le silo à boues, quant à lui, est également constitué par une citerne souple (6) comportant donc un évent (9), un conduit d'admission (13) sur l'un de ses côtés et un raccord (17) avec une vanne d'évacuation.

Eventuellement, un tel silo peut comporter d'une manière similaire à l'aérateur (1) une membrane perforée à sa base permettant l'introduction d'air et peut renfermer des additifs divers permettant d'activer la circulation d'air.

De plus, les différentes enceintes qui constituent l'installation peuvent être facilement chauffées, notamment en période de gel, ou voire même activer le processus biologique.

Comme indiqué précédemment, une telle installation d'épuration peut également être adaptée pour traiter des gaz pollués. Dans un tel cas, le circuit de recirculation des boues (11) est éliminé et l'air pollué est introduit à l'intérieur de l'enceinte (1) au travers du circuit (18) permettant la diffusion sur toute la surface de la base du réservoir dans le cadre de l'utilisation d'un tel ensemble comme aérateur.

L'eau de lavage est, quant à elle, introduite au travers du circuit d'admission (10) de l'effluent. L'air purifié est évacué au travers de l'évent (7) et l'eau chargée des polluants et de la biomasse produite sont transférés à l'intérieur du décanteur (2) dont la structure est la même que celle décrite dans le cadre du traitement d'un effluent liquide.

Eventuellement, il pourrait cependant être envisagé de recycler l'eau pure pour la réintroduire dans l'enceinte (1) au travers du circuit (10).

Par rapport aux solutions antérieures, une station d'épuration réalisée conformément à l'invention permet de traiter des effluents pollués, qu'ils soient liquides ou gazeux et maintient la pérennité du traitement tout au long de l'année, quelles que soient les conditions climatiques.

Elle présente par ailleurs de très nombreux avantages par le fait qu'elle élimine les émanations mal odorantes et élimine les risques de dilution des effluents en cas de fortes pluies ou de neige et les risques de contamination par éléments extérieurs tels que débris végétaux, feuilles par exemple.

Elle permet égaiement de respecter les sites puisque sa mise en place ne nécessite pas de modification importante de la configuration des sols et peut être déplacée rapidement sur un autre site..

Enfin, sa capacité peut être facilement adaptée en fonction des besoins.

## Revendications

1. Station d'épuration d'effluents pollués fluides, liquides ou gazeux - eau ou air par exemple - qui comprend une zone de traitement (1) en vue de séparer le fluide pollué des matières polluantes, une zone de décantation (2) et de préférence une zone de stockage (3) des boues concentrées après décantation, caractérisée en ce que la zone de traitement (1) est constituée par une citerne souple, fermée, étanche, et autoportante, comprenant :
- un circuit d'admission (10,18) du fluide pollué à traiter et au moins un circuit (11) ou (18) pour l'introduction de l'élément de traitement, l'un de ces circuits (18), permettant d'injecter un gaz (air) à l'intérieur de la citerne ;
- un circuit de transfert (14) du liquide ou des boues chargées des constituants polluants dans la zone de décantation (2) ;
- un évent (7) pour l'évacuation de gaz.

2. Station d'épuration d'effluents liquides pollués selon la technique dite à biomasse activée selon la revendication 1, caractérisée en ce que l'aérateur constituant la zone de traitement (1) est constitué par une citerne souple (4) comprenant :
- un circuit d'entrée (11) pour les boues décantées destinées à assurer la maîtrise de la croissance de la biomasse ;
- un circuit d'admission (10) dudit effluent permettant sa répartition à l'intérieur du réservoir de façon régulière et homogène ;
- un circuit de prélèvement (14) après traitement en vue du transfert à la zone de décantation et ;
- des moyens permettant de diffuser de l'air provenant du circuit (18) à l'intérieur de la citerne ;
- des évents pour l'évacuation de l'air entrant et des gaz générés pendant l'aération de l'effluent traité.

3. Station d'épuration selon la revendication 2, caractérisée en ce que les moyens qui permettent de diffuser de l'air sont constitués par une membrane perforée (20) soudée contre la paroi inférieure de la citerne.

4. Station d'épuration selon l'une des revendication 2 et 3, caractérisée en ce que le circuit d'admission (10) de l'effluent à l'intérieur de la citerne (4) comporte des déflecteurs ou répartiteurs (23) perforés disposés à l'intérieur même de ladite citerne et s'étendant au moins sur une partie le long des parois de celle-ci, le circuit de prélèvement (14) de la liqueur mixte étant raccordé à la partie supérieure de la citerne.

5. Station d'épuration selon l'une des revendications 2 à 4, caractérisée en ce que la membrane perforée (20) au travers de laquelle s'effectue l'introduction de l'oxygène à l'intérieur de la citerne, est soudée contre la base (19) de cette dernière selon des zones localisées (21) ménageant des chicanes, l'admission de l'air étant obtenu par un ou des orifices aménagés sur le fond de la citerne.

6. Station d'épuration de gaz pollués selon la revendication 1, caractérisée en ce que la zone de traitement (1) constituée par une citerne souple, étanche, fermée, forme la chambre de lavage d'une telle station, le gaz pollué étant admis au travers du circuit ( 18) permettant de le diffuser sur toute la surface à la base du réservoir, l'eau de lavage étant quant à elle introduite par le circuit d'admission (10), le gaz purifié s'évacuant par l'évent (7).

7. Décanteur utilisable sur une station d'épuration d'effluents pollués, caractérisé en ce qu'il est constitué par une citerne souple (5) comportant un circuit d'admission (12) relié au circuit de transfert de l'aérateur, la liqueur mixte constituée de boue et de liquide aéré, étant introduite à l'intérieur de ladite citerne en générant le minimum de turbulence par l'intermédiaire d'un répartiteur constitué de déflecteurs, souples ou rigides, se présentant sous la forme d'un cylindre perforé sur sa longueur ou ouvert à son extrémité et tendant à repousser la boue vers le fond de l'enceinte.

8. Décanteur selon la revendication 7, caractérisé en ce que l'enceinte est équipée, en partie basse, d'un circuit d'évacuation des boues (16) transférant ces dernières soit à un silo de stockage (6), soit en recyclant une partie desdites boues au niveau de l'aérateur (4).

9. Silo à boues utilisable sur une station d'épuration, caractérisé en ce qu'il est constitué par une citerne souple (6) comportant des moyens permettant de diffuser de l'oxygène sur toute la surface de sa base, moyens constitués par une membrane perforée soudée contre ladite base.

10. Utilisation d'une citerne souple fermée, étanche et autoportante, réalisée à partir d'un tissu enduit pour la réalisation des zones de traitement d'une station d'épuration d'effluents pollués fluides, liquides ou gazeux.
